(19) Europäisches Patentamt / European Patent Office / Office européen des brevets

(11) **EP 3 438 460 B1**

(12) **EUROPÄISCHE PATENTSCHRIFT**

(45) Veröffentlichungstag und Bekanntmachung des Hinweises auf die Patenterteilung:
**20.03.2024 Patentblatt 2024/12**

(21) Anmeldenummer: **17185000.1**

(22) Anmeldetag: **04.08.2017**

(51) Internationale Patentklassifikation (IPC):
**F04D 19/04** *(2006.01)*   **F04D 27/00** *(2006.01)*

(52) Gemeinsame Patentklassifikation (CPC):
**F04D 19/042; F04D 19/04; F04D 27/001;**
F05D 2270/3011

(54) **VAKUUMPUMPE**

VACUUM PUMP

POMPE À VIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.02.2019 Patentblatt 2019/06**

(73) Patentinhaber: **PFEIFFER VACUUM GMBH**
**35614 Asslar (DE)**

(72) Erfinder:
• **Hofmann, Jan**
**35305 Grünberg (DE)**

• **Schneider, Florian**
**35305 Grünberg (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A2- 2 105 615     DE-A1- 4 410 903**
**DE-A1- 10 354 205     JP-A- H0 674 187**
**JP-A- H06 159 286**

**Beschreibung**

Die vorliegende Erfindung betrifft eine Vakuumpumpe, insbesondere eine Turbomolekularpumpe, mit zumindest einer Pumpstufe und mit einer Druckermittlungseinheit zur Bestimmung eines an einer Saugseite der Vakuumpumpe herrschenden Drucks.

Vakuumpumpen werden in unterschiedlichen technischen Gebieten eingesetzt, um ein für den jeweiligen Prozess notwendiges Vakuum zu erzeugen. Um einen ordnungsgemäßen Betrieb der Vakuumpumpe sicherzustellen, ist es in vielen Fällen erforderlich, den saugseitig herrschenden Druck zu überwachen.

Zur Überwachung des Prozesses und insbesondere des Drucks, wird beispielsweise das Messverfahren nach Pirani eingesetzt, welches sich vor allem durch seinen kostengünstigen Einsatz bei einer hohen Messgenauigkeit auszeichnet. Dieses und andere vergleichsweise günstige und damit wirtschaftliche Messverfahren können jedoch bei Hochvakuumdrücken (insbesondere kleiner $5 \cdot 10^{-4}$ mbar), wie sie üblicherweise durch eine Turbomolekularpumpe bereitgestellt werden, auf Grund des jeweiligen physikalischen Messprinzips nicht oder nur eingeschränkt genutzt werden.

Die JP H06 74187 A offenbart eine Turbomolekularpumpe mit den Merkmalen des Oberbegriffs des Anspruchs 1 mit einer hohen Evakuierungsgeschwindigkeit in einem Niedrigvakuum-Bereich und einem hohen Endvakuum, was mittels druckabhängig einstellbarer Eindringtiefe von Statorelementen zwischen Rotorelemente realisiert wird. Der saugseitige Druck der Vakuumpumpe wird dabei aus einer Messung eines auslassseitigen Drucks abgeschätzt.

Die DE 103 54 205 A1 beschreibt ein Verfahren zur Steuerung eines Antriebsmotors einer Vakuum-Verdrängerpumpe, mittels dem ein zu erreichender Enddruck schneller erreicht werden kann.

Die DE 44 10 903 A1 beschreibt ein Verfahren zur Druckmessung, bei dem ein Drehzahlabfall eines Rotors einer Turbomolekularpumpe gemessen und verwendet wird, um aus einem bekannten Vorvakuumdruck den durch die Turbomolekularpumpe erzeugten Hochvakuumdruck zu ermitteln.

Eine Aufgabe der vorliegenden Erfindung ist es daher, eine kostengünstige Vakuumpumpe, insbesondere eine Turbomolekularpumpe, mit einer Messeinrichtung zu schaffen, mit deren Hilfe sich der saugseitig herrschende Druck zuverlässig bestimmen lässt.

Diese Aufgabe wird durch eine Vakuumpupe mit den Merkmalen des Anspruchs 1 gelöst.

Die erfindungsgemäße Vakuumpumpe, insbesondere eine Turbomolekularpumpe, weist zumindest eine Pumpstufe und eine Druckermittlungseinheit zur Bestimmung eines an einer Saugseite der Vakuumpumpe herrschenden Drucks auf, welche eine Messeinrichtung umfasst, wobei ein Messabgriff der Messeinrichtung - in axialer Richtung der Vakuumpumpe gesehen - im Bereich der Pumpstufe oder stromabwärts der Pumpstufe vorgesehen ist. Unter dem saugseitigen Druck ist dabei der Druck vor der ersten Pumpstufe, insbesondere der Druck im Bereich eines Einlasses der Pumpe, zu verstehen.

Durch den Messabgriff im Bereich der Pumpstufe oder stromabwärts der Pumpstufe, wird das Problem der Druckbestimmung im Hochvakuum umgangen, da nicht der saugseitige Hochvakuumdruck direkt gemessen sondern indirekt bestimmt wird. D.h. mit Hilfe der Messeinrichtung wird ein Gasdruck gemessen, der durch die Pumpe bereits erhöht wurde, d.h. das Gas wurde bereits komprimiert. Es kann beispielsweise auch der ausstoßseitige Druck der Pumpe bestimmt werden. Ist die Verdichtungsleistung der Pumpe bei gegebenen Bedingungen bekannt, so kann man von dem gemessenen Druck im Bereich oder hinter der ersten Pumpstufe oder sogar vom Vorvakuumdruck auf den saugseitig herrschenden Druck schließen. Dieser bereits erhöhte (Vorvakuum)Druck kann mit Hilfe eines günstigen Messverfahrens (z.B. Pirani) gemessen werden. Hierfür wird beispielsweise eine günstige Messröhre am Messabgriff angeschlossen. Grundsätzlich kann der Messabgriff beliebig zwischen dem Beginn der ersten Pumpstufe und der Ausgangsseite der Pumpe positioniert werden. Unter einem Messabgriff kann dabei grundsätzlich die Möglichkeit zur Entnahme oder zum Abgriff des lokal herrschenden Drucks zur Bestimmung eines Messwerts verstanden werden. Der Messabgriff kann in unterschiedlichster Weise ausgebildet sein, um eine lokale Messwertentnahme zu ermöglichen.

Weitere Ausführungsformen der Erfindung sind in der Beschreibung, den Ansprüchen und den beigefügten Zeichnungen angegeben.

Die Pumpstufe der Vakuumpumpe umfasst insbesondere zumindest einen Rotor und einen Stator. Unter einer Pumpstufe einer Vakuumpumpe, insbesondere Turbomolekularpumpe, soll vorliegend insbesondere eine Anordnung aus zumindest je einer Rotor- und Statorscheibe verstanden werden. Die Rotorscheibe ist einer Rotorwelle zugeordnet, während die Statorscheibe drehfest angeordnet ist. Eine Pumpstufe umfasst üblicherweise mehrere in Reihe oder hintereinander paarweise angeordneten Rotor- und Statorscheiben. Eine Vakuumpumpe, insbesondere Turbomolekularpumpe, enthält üblicherweise mehrere Pumpstufen der vorstehend beschriebenen Art. Es können jedoch auch Pumpstufen unterschiedlicher Auslegung oder Bauart vorgesehen sein.

Gemäß einer weiteren Ausführungsform ist die Pumpstufe der Vakuumpumpe als eine Holweckstufe ausgebildet. Eine Holweckstufe ist eine Molekularpumpstufe mit schraubenförmigen Pumpkanälen. Der Rotor besteht dabei aus einer zylindrischen Trommel mit glatter Oberfläche, der koaxiale Stator ist auf der Innenseite mit einer schraubenförmigen Nut versehen.

Der Messabgriff ist als eine Öffnung in einem die Pumpstufe aufnehmenden Gehäuse (einstückig oder mehrteilig) der Vakuumpumpe ausgebildet.

Erfindungsgemäß ist die Öffnung der Vakuumpumpe auch als Flutöffnung, insbesondere Flutbohrung zum Fluten der Vakuumpumpe nutzbar. Durch die Verwendung der Öffnung sowohl als Messabgriff oder Anzapföffnung, als auch als Flutbohrung, wird nur eine Öffnung im Gehäuse der Vakuumpumpe für eine Vielzahl von Funktionen benötigt. Dadurch wird mitunter eine weitere Fehlerquelle oder auch Defektstelle der Vakuumpumpe vermieden und Herstellungskosten reduziert.

Die Flutbohrung wird zum Fluten beziehungsweise zum Belüften der Vakuumpumpe verwendet. Durch das Fluten nach dem Abschalten der Pumpe wird eine Rückdiffusion von schädigenden Stoffen (zum Beispiel Kohlenwasserstoffen) von der Vorvakuumseite durch die Pumpe verhindert. Durch Fluten mit trockenem Inertgas an Stelle von Raumluft kann zusätzlich ein Eintrag von Wasserdampf in die Pumpe vermieden werden. Die Öffnung kann auch als Schleppgasöffnung nutzbar sein.

Gemäß einer Ausführungsform umfasst die Messeinrichtung der Vakuumpumpe einen Drucksensor zu Messung des an dem Messabgriff abgegriffenen Drucks, wobei der Messabgriff mit einem Drucksensor in Fluidverbindung steht. Der Drucksensor kann dabei mit bereits vorhandenem Zubehör an dem Messabgriff beziehungsweise der Flutöffnung oder -bohrung oder Schleppgasöffnung betrieben werden. Bei dem Zubehör kann es sich beispielsweise um eine Fluteinrichtung handeln.

Gemäß einer weiteren Ausführungsform umfasst der Drucksensor der Vakuumpumpe ein Pirani-Vakuummeter (Pirani-Messrohr) oder eine kapazitive Messröhre. Der Vorteil einer Verwendung dieser Bauteile für den Drucksensor liegt vor allem in der Kostensenkung. Die kleinen und vergleichsweise preisgünstigen Messröhren können dabei einfach in die Vakuumpumpe integriert werden. Zudem besitzen sie eine hohe Messgenauigkeit.

Generell ist der Einsatz von beliebigen Drucksensortypen möglich, wobei diese auch auf den unterschiedlichsten Messprinzipien basieren können.

Die Druckermittlungseinheit der Vakuumpumpe ist derart ausgestaltet, dass der saugseitig herrschende Druck anhand des an dem Messabgriff abgegriffenen und durch die Messeinrichtung ermittelten Drucks bestimmbar ist, insbesondere auf Basis eines vorbestimmten Korrekturfaktors, der ein Verhältnis von dem an dem Messabgriff abgegriffenen Druck zu dem saugseitig herrschenden Druck charakterisiert. Durch den Korrekturfaktor kann der saugseitig herrschende Druck mit Hilfe des abgegriffenen Drucks berechnet werden. Der herrschende Druck berechnet sich nach:

$$p_{HV} = p_M \cdot S_M / S_{HV} = p_M \cdot K$$

Mit:

$p_{HV}$    Hochvakuumdruck

$p_M$    Druck am Messabgriff

$S_M$    internes Saugvermögen der Vakuumpumpe am Messabgriff;

$S_{HV}$    Saugvermögen der Vakuumpumpe an der Saugseite beziehungsweise Einlassseite;

K    Korrekturfaktor, entspricht dem Quotienten aus den beiden Saugvermögen ($S_M / S_{HV}$).

Durch die vorliegende Formel wird deutlich, dass es besonders vorteilhaft ist, den Messabgriff möglichst an eine Stelle zu legen, an welcher das interne Saugvermögen $S_M$ sehr klein ist, da dadurch - bei gegebenen Parametern $S_{HV}$ und $p_{HV}$ - hohe Drücke an dem Messabgriff $p_M$ gemessen werden.

Unter Saugvermögen wird ein Volumenstrom verstanden, der pro Zeiteinheit durch eine Querschnittsfläche oder einen pumpwirksamen Abschnitt gefördert werden kann.

Gemäß einer besonders bevorzugten Ausführungsform umfasst die Vakuumpumpe zumindest ein Mittel, mit welchem zumindest ein Betriebsparameter der Vakuumpumpe, beispielsweise eine Drehzahl, eine Antriebsleistung, eine Gerätetemperatur oder ein Vorvakuumdruck ermittelbar und an die Druckermittlungseinheit übermittelbar und/oder in diese eingebbar ist. Die Druckermittlungseinheit kann mit einer Steuereinrichtung zur Steuerung/Regelung der Vakuumpumpe verbunden sein. Sie kann auch in die Steuereinrichtung integriert sein. Ganz grundsätzlich gilt, dass die Messeinrichtung, die Druckermittlungseinheit und die Steuereinrichtung ein gemeinsames Modul bilden können. Es ist auch möglich, nur die Messeinrichtung und die Druckermittlungseinheit zu einer Einheit zusammen zu fassen, insbesondere bilden die beiden Komponenten ein integriertes Gerät. Gleiches gilt für die Druckermittlungseinheit und die Steuereinrichtung. Die Druckermittlungseinheit kann auch eine separate Einheit sein.

Die Bestimmung des saugseitig herrschenden Drucks wird dabei grundsätzlich in der Druckermittlungseinheit durchgeführt, wobei diese - wie vorstehend bereits erläutert - mit der Messeinrichtung und/oder der Steuereinrichtung zusammengefasst oder in diese integriert sein kann. Es ist aber auch denkbar, ein Teil der Berechnungen zur Bestimmung des saugseitigen Drucks in der Druckermittlungseinheit vorzunehmen und andere Teile der Berechnungen in der Steuereinrichtung.

Ferner können die Messeinrichtung, die Druckermittlungseinheit und/oder die Steuereinrichtung Mittel zur manuellen Eingabe von Daten, insbesondere der Betriebsparameter, aufweisen, wie beispielsweise Tasten, einen Touchscreen oder ähnliches. Den genannten Komponenten können auch derart ausgestaltet sein, dass ihnen externe Daten über Datenleitungen übermittelt werden können. Die Übermittlung von Daten kann drahtlos oder drahtgebunden erfolgen. Die Eingabe oder Übermittlung von Daten kann manuell, automatisch, einmalig, bei Bedarf und/oder zyklisch erfolgen.

Hierbei können jedoch auch weitere Parameter wie Schaltzustände der Ventile des Vakuumsystems (z.B. Gaslastventil) sowie Bestandteile eines möglichen Prozessgasgemischs ermittelt, übermittelt oder eingegeben werden. Durch die Aufnahme der verschiedenen Betriebsparameter kann eine laufende Zustandsbewertung die aktuelle Zuverlässigkeit des ermittelten Hochvakuumdrucks bewerten. Einzelne Betriebsparameter, welche nicht ermittelt werden müssen oder zuvor schon bestimmt wurden und noch gültig sind, können zusätzlich übermittelt oder eingegeben werden. Die Zustandsbewertung kann dem Benutzer der Vakuumpumpe direkt ausgegeben und/oder abgespeichert werden. Des Weiteren ist es möglich, dass beispielsweise ein Warnsignal ertönt sobald die Zustandsbewertung einen kritischen Zustand erkennt oder ein entsprechender Wert einen zuvor bestimmten Bereich erreicht oder verlässt. Zusätzlich kann die Ausgabe des Hochvakuumdrucks auf einen vordefinierten Bereich eingeschränkt werden.

Es ist besonders von Vorteil, wenn die Druckermittlungseinheit derart ausgestaltet sind, dass der Korrekturfaktor auf Basis des ermittelten Betriebsparameters modifizierbar ist. Durch die Modifizierung des Korrekturfaktors mit Hilfe zumindest eines Betriebsparameters wird eine jeweils an das vorherrschende System angepasste Berechnung des saugseitig herrschenden Hochvakuumdrucks ermöglicht. Hierdurch wird die Berechnung des saugseitigen Drucks noch genauer und ist unabhängig von Prozess- oder Umgebungsvariationen und anfallenden Prozess- oder Umgebungsstörungen bzw. zeitliche Variationen der Betriebsparameter.

Die vorliegende Erfindung betrifft ferner ein Verfahren zum Bestimmen eines an einer Saugseite einer Vakuumpumpe (insbesondere Turbomolekularpumpe) herrschenden Drucks, wobei die Pumpe bevorzugt gemäß einer der vorstehend beschriebenen Ausführungsformen ausgebildet ist. Das erfindungsgemäße Verfahren zeichnet sich dadurch aus, dass zum Bestimmen des genannten Drucks, ein im Bereich einer Pumpstufe der Vakuumpumpe oder stromabwärts der Pumpstufe in der Vakuumpumpe herrschender Druck gemessen wird und auf Basis des gemessenen Drucks der saugseitig herrschende Druck bestimmt wird.

Gemäß einer vorteilhaften Ausgestaltung des erfindungsgemäßen Verfahrens wird ein Korrekturfaktor bestimmt, der ein Verhältnis von dem an dem Messabgriff abgegriffenen Druck zu dem saugseitig herrschenden Druck charakterisiert, insbesondere wobei die Bestimmung des Korrekturfaktors werksseitig und/oder am Einsatzort erfolgt. Hierdurch können sowohl gleichbleibende Betriebsparameter als auch sich zeitlich verändernde Betriebsparameter mit in den Korrekturfaktor mit einfließen. Eine Bestimmung des Korrekturfaktors kann dabei beispielsweise für jede einzelne Vakuumpumpe vor jeder Inbetriebnahme vorgenommen werden. Es ist jedoch ebenfalls möglich, dass diesen nur einmalig, stichprobenartig, turnusgemäß, außerhalb des Normbetriebs oder bei einer Änderung der Anwendung und/oder der Prozessgaszusammensetzung. zu bestimmen

Gemäß einer weiteren Ausgestaltung des Verfahrens wird zumindest ein Betriebsparameter der Vakuumpumpe, beispielsweise eine Drehzahl, eine Antriebsleistung, eine Gerätetemperatur oder ein Vorvakuumdruck ermittelt und an eine Druckermittlungseinheit der Vakuumpumpe übermittelt oder in diese eingegeben.

Bei einer weiteren Ausgestaltung des Verfahrens wird der Korrekturfaktor auf Basis des ermittelten oder eingegebenen Betriebsparameters modifiziert, insbesondere während des Betriebs der Pumpe. Bevorzugt werden mehrere Betriebsparameter bei der Modifizierung des Korrekturfaktors berücksichtigt, um einen zuverlässigen Korrekturfaktor und damit einen zuverlässigen berechneten Wert des saugseitig herrschenden Drucks zu erhalten. Mit anderen Worten wird bei dieser Ausführungsform berücksichtigt, dass der Korrekturfaktor eine Funktion eines oder mehrerer Betriebsparameter sein kann. Ändern sich diese Betriebsparameter, so wird auch der Korrekturfaktor entsprechend angepasst, um stets einen zuverlässigen Wert für den an der Saugseite herrschenden Drucks zu erhalten.

Gemäß einer weiteren bevorzugten Ausführungsform wird auf Basis des Betriebsparameters, insbesondere unter Berücksichtigung des gemessenen Drucks und/oder des bestimmten saugseitig herrschenden Drucks, ein Zustandsbewertungsparameter bestimmt, der ausgegeben und/oder abgespeichert wird, insbesondere falls der Zustandsbewertungsparameter einen Schwellwert unterschreitet oder überschreitet oder einen vorbestimmten Wertebereich verlässt. Für eine verlässliche Zustandsbewertung fließen optimaler Weise mehrere Betriebsparameter in den Zustandsbewertungsparameter mit ein. Der Zustandsbewertungsparameter ermöglicht eine Abschätzung der Zuverlässigkeit des berechneten saugseitig herrschenden Drucks.

Zusätzlich kann ein weiterer zusätzlicher Vorvakuum-Drucksensor vorhanden sein, welcher zur Validierung des berechneten Hochvakuumdrucks genutzt werden kann.

Nachfolgend wird die Erfindung beispielhaft anhand vorteilhafter Ausführungsformen unter Bezugnahme auf die beigefügten Figuren beschrieben. Es zeigen, jeweils schematisch:

Fig. 1 eine perspektivische Ansicht einer Turbomolekularpumpe,

Fig. 2 eine Ansicht der Unterseite der Turbomolekularpumpe von Fig. 1,

Fig. 3 einen Querschnitt der Turbomolekularpumpe längs der in Fig. 2 gezeigten Schnittlinie A-A,

Fig. 4 eine Querschnittsansicht der Turbomolekularpumpe längs der in Fig. 2 gezeigten Schnittlinie B-B,

Fig. 5    eine Querschnittsansicht der Turbomolekularpumpe längs der in Fig. 2 gezeigten Schnittlinie C-C,

Fig. 6    eine schematische Ansicht einer ersten Ausführungsform der erfindungsgemäßen Vakuumpumpe mit integrierter, kostengünstiger Druckmessung

Fig.7    eine perspektivische Ansicht einer Turbomolekularpumpe mit mehreren Einlässen,

Fig. 8    eine schematische Ansicht einer zweiten Ausführungsform der erfindungsgemäßen Vakuumpumpe mit integrierter, kostengünstiger Druckmessung,

Fig. 9    ein Verhältnis von $p_M$ zu $p_{HV}$ unter der Darstellung des Korrekturfaktors und das Verhältnis von $p_M$ zu dem internen Saugvermögen der Vakuumpumpe am Messabgriff und

Fig. 10    ein Verhältnis von $p_{VV}$ (Vorvakuumdruck) zu $p_{HV}$ bei einem im Wesentlichen konstanten Gasfluss durch die Pumpe.

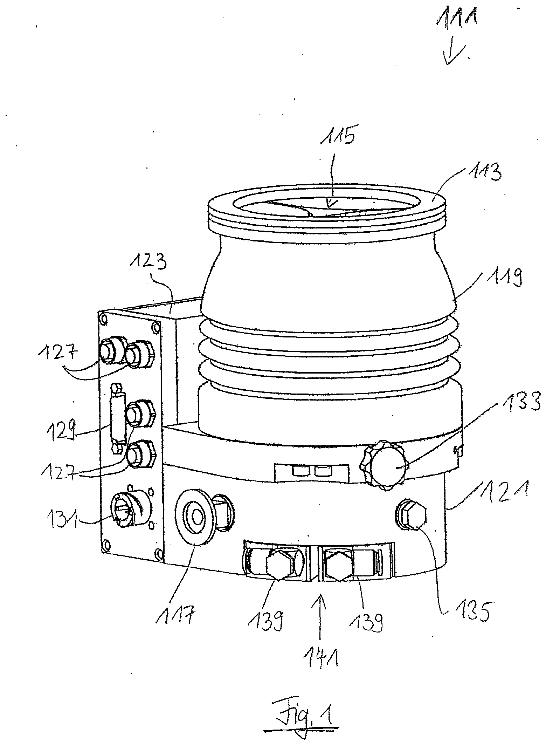

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

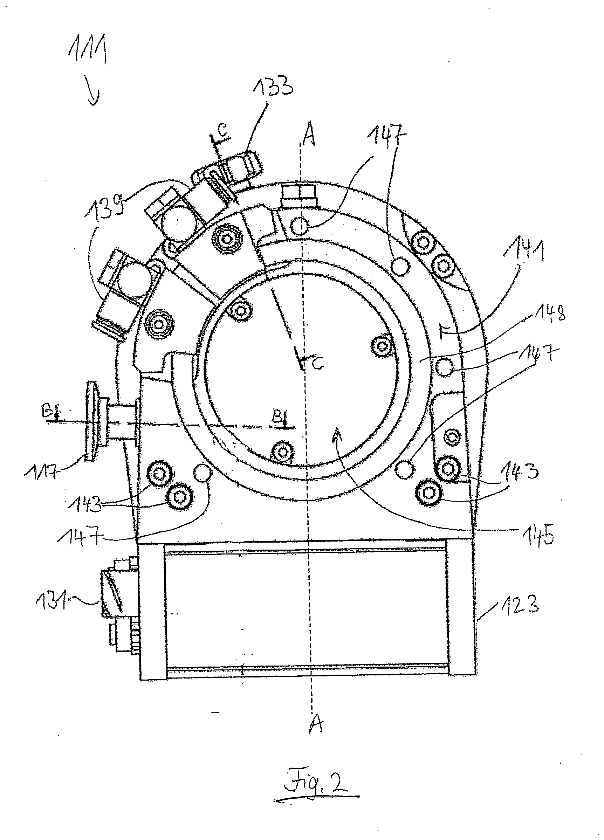

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

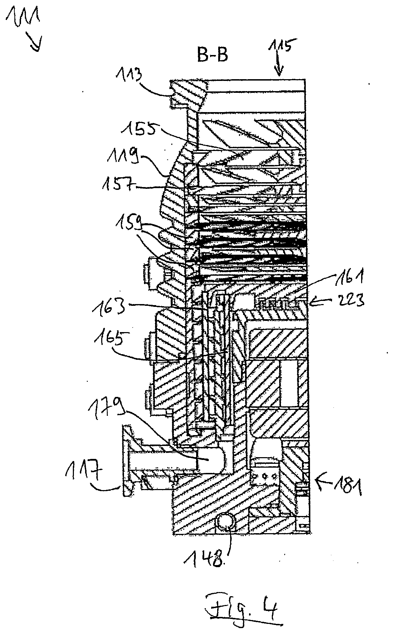

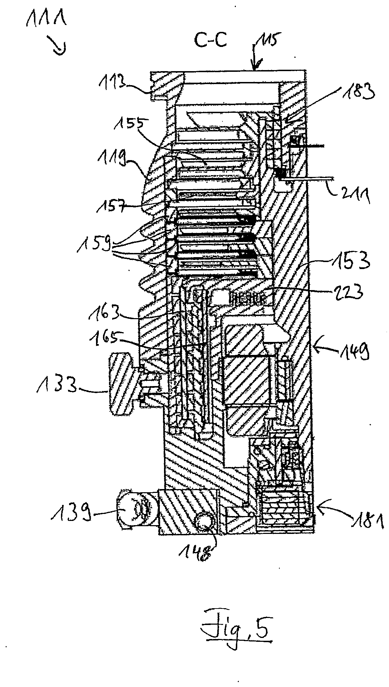

In den Figuren 2 bis 5 ist eine Kühlmittelleitung 148 dargestellt, in welcher das über die Kühlmittelanschlüsse 139 ein- und ausgeleitete Kühlmittel zirkulieren kann.

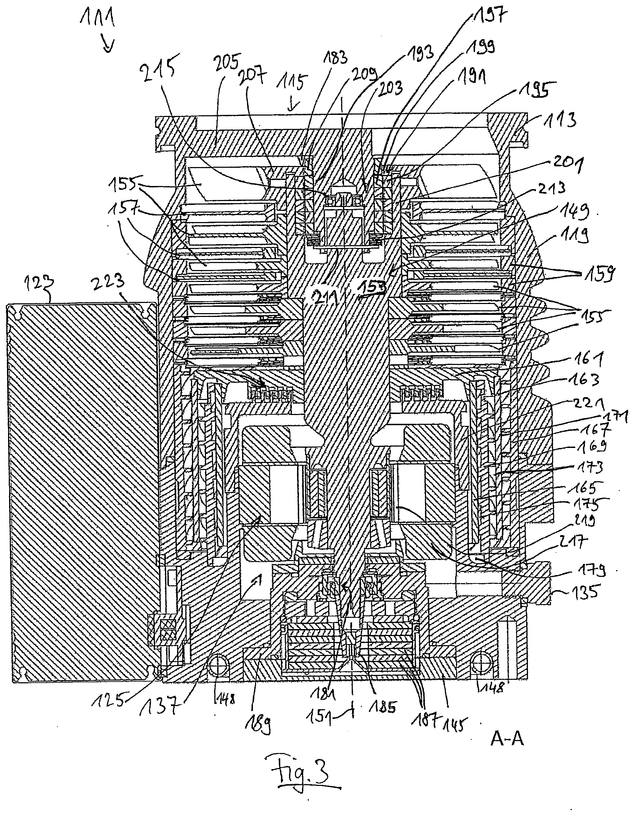

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

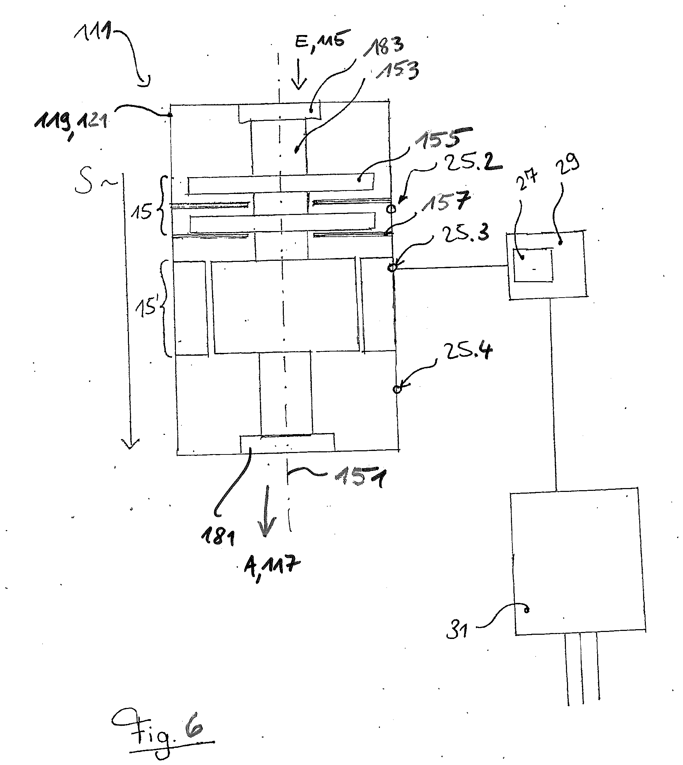

Fig. 6 zeigt eine Vakuumpumpe 111, welche insbesondere eine Turbomolekularpumpe ist, bei der das erfindungsgemäße Konzept realisiert ist. Die Vakuumpumpe 111 kann grundsätzlich so ausgestaltet sein, wie die anhand der Figuren 1-5 beschriebenen Pumpen 111 bzw. in diese Pumpen 111 kann das erfindungsgemäße Konzept ohne weiteres integriert werden. Grundsätzlich kann es jedoch auch in Turbomolekularpumpen abweichender Bauart oder in andere Pumpentypen integriert werden.

Die Vakuumpumpe 111 umfasst ein zumindest eine Pumpstufe 15 aufnehmendes Gehäuse 119, das auch das vorstehend beschriebene Unterteil 121 umfassen kann. Die Pumpstufe 15 weist mehrere Rotorscheiben 155 und Statorscheiben 157 auf (nur 2 Scheibenpaare 155, 157 sind beispielhaft dargestellt). Es kann auch eine als Holweckstufe ausgebildete Pumpstufe 15' vorgesehen sein (nur schematisch angedeutet). Die rotierenden Bauteile der Pumpstufen 15, 15' sind drehfest mit einer Pumpwelle 153 verbunden, wobei diese selbst drehbar um die Rotationsachse 151 der Vakuumpumpe 111 in geeigneten Lagern 181, 183 gelagert ist.

Zur Bestimmung des einlassseitig (E) der Pumpe 111 herrschenden Drucks ist ein Messabgriff vorgesehen, der nicht dem Druck vor der ersten Pumpstufe 15 ausgesetzt ist, sondern sich - in axialer Richtung der Pumpe 111 gesehen, d.h. von der Einlassseite E aus entlang der Rotationsachse 151 gesehen - im Bereich der ersten Pumpstufe 15 oder dahinter befindet, wo durch die Wirkung der Pumpe 111 bereits ein höherer Druck herrscht. Ein solcher Messabgriff kann beispielsweise eine Öffnung 25.2 sein, die im Bereich der ersten Pumpstufe 15 in das Gehäuse 119, 121 eingebracht ist. Alternativ und zusätzlich ist im Bereich der Holweckstufe 15' oder stromabwärts der Pumpstufen 15, 15' in Strömungsrichtung S des gepumpten Gases eine Öffnung 25.3 oder 25.4 im Gehäuse 119, 121 ausgebildet.

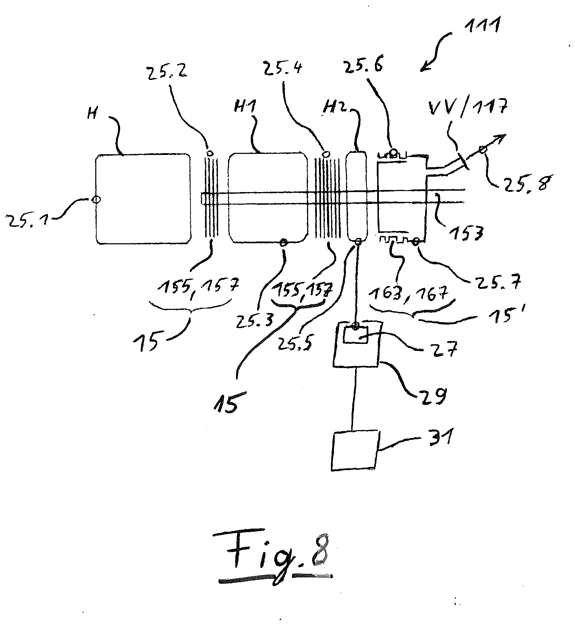

Grundsätzlich reicht es aus, lediglich eine der Öffnungen 25.2 bis 25.4 vorzusehen, um das erfindungsgemäße Konzept umzusetzen. Es können jedoch mehrere Öffnungen vorhanden sein, um die Pumpe 111 flexibler einsetzen zu können. Dies gilt auch für die Pumpe 111 gemäß Fig. 8, die nachstehend noch beschrieben wird.

Die Öffnungen 25.2 bis 25.4 können sowohl als Messabgriff als auch als Flutöffnung oder Schleppgasöffnungen fungieren. Ein Sensor 27 ist an den Messabgriff beziehungsweise die Öffnungen 25.2 bis 25.4 angeschlossen oder direkt dort angebracht. Der Sensor 27 ist Teil einer Messeinrichtung 29 und umfasst beispielsweise eine günstige Messröhre. Die Messeinrichtung 29 ist an eine Druckermittlungseinheit 31 angeschlossen oder in diese integriert. Die Druckermittlungseinheit 31 steht bevorzugt mit einer Steuereinrichtung (nicht gezeigt) der Pumpe 111 in Verbindung oder ist in diese integriert. Bei einem Betrieb der Vakuumpumpe 111 strömt das abzupumpende Gas an der Einlassseite E, 115 ein und an der Auslassseite A, 117 aus.

Mit Hilfe der Druckermittlungseinheit 31, wird der an der Saug- beziehungsweise Einlassseite E herrschende Druck bestimmt. Bei der Messung des Drucks innerhalb der Pumpstufen 15, 15' oder stromabwärts der Pumpstufen 15, 15' kann vor allem ein Pirani-Vakuummeter oder eine kapazitive Messröhre zum Einsatz kommen. Da in dem Bereich der Öffnungen 25.2 bis 25.4 ein Druck herrscht, welcher höher ist als der an der Saugseite E herrschende Hochvakuumdruck, können jene kostengünstigen Messröhren eingesetzt werden. Auch von einem gemessenen Vorvakuumdruck kann auf den an der Saugseite E herrschenden Hochvakuumdruck geschlossen werden.

Der in der Öffnung 25.2 bis 25.4 mit dem Sensor 27 abgegriffene und in der Messeinrichtung 29 gemessene Druck wird mit Hilfe der Druckermittlungseinheit 31 und eines Korrekturfaktors in den zu bestimmenden saugseitig herrschenden Hochvakuumdruck umgerechnet. Dabei können ein oder mehrere Betriebsparameter (der / die durch nicht gezeigte Sensoren bestimmbar und von der Druckermittlungseinheit 31 oder der Steuereinrichtung erfassbar ist / sind) berücksichtigt werden. Der / die ermittelte(n) oder auch zuvor bekannte(n) Betriebsparameter kann / können in die Druckermittlungseinheit 31 oder Steuereinrichtung eingespeist oder eingegeben werden. Als Betriebsparameter kann eine Vielzahl an verschiedenen Parametern verstanden werden. Je mehr relevante Betriebsparameter in den Korrekturfaktor mit einfließen, desto genauer ist der später bestimmte Hochvakuumdruck. Die Betriebsparameter können bei dem Betrieb der Pumpe 111 kontinuierlich erfasst werden und in die Berechnung des Korrekturfaktors K einfließen, um stets einen genauen Wert für das eingangsseitig herrschende Hochvakuum zu erhalten.

Des Weiteren kann zusätzlich eine Zustandsbewertung mit Hilfe der Messeinrichtung 29, der Druckermittlungseinheit 31 und/oder der Steuereinrichtung erfolgen.

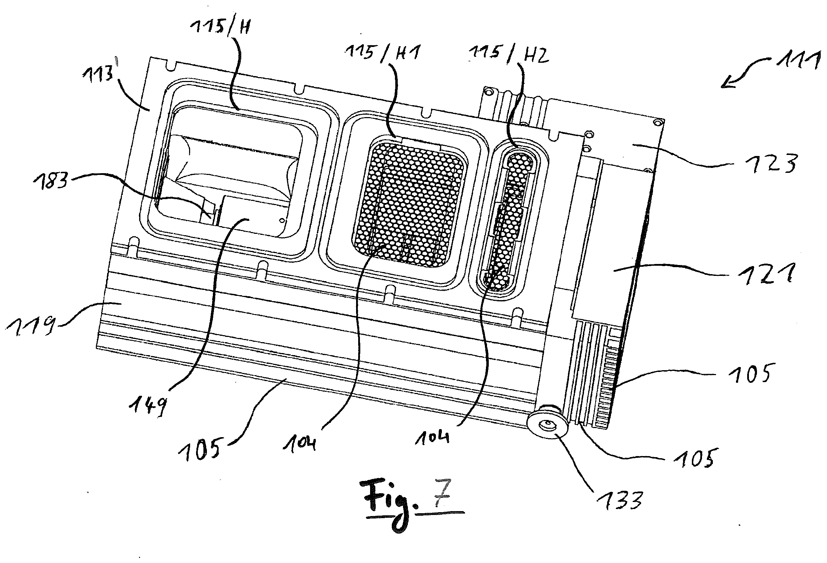

Die in Fig. 7 gezeigte Turbomolekularpumpe 111 kann in ihrem Grundaufbau dem der in den Figuren 1 bis 5 gezeigten Pumpe 111 entsprechen. Die Turbomolekularpumpe 111 der Fig. 7 hat einen seitlichen, in diesem Fall parallel zur Rotationsachse 151 angeordneten Einlassflansch 113 mit mehrere Pumpeneinlässe 115, die beginnend auf der Hochvakuumseite mit H, H1, H2 und so weiter fortlaufend benannt sind. Der Rotor 149 wird auf der Hochvakuumseite von dem Magnetlager 183 getragen. Die dem Rotor 149 zugeordneten Pumpstufen sind zumindest teilweise axial beabstandet zueinander angeordnet. Vorteilhafterweise sind die Pumpstufen zumindest teilweise zwischen den Pumpeneinlässen H, H1, H2 angeordnet. Gleichwohl kann ein Pumpeneinlass auch direkt im Bereich oder auf axialer Höhe einer Pumpstufe angeordnet sein.

Jeder Pumpeneinlass H, H1, H2 hat eigene, von den anderen Einlässen typischerweise verschiedene Kenndaten (z.B. Saugvermögen, Kompression,...) und entsprechend herrschen während dem Betrieb der Vakuumpumpe 111 dort unterschiedliche Drücke. Geförderte Gase aus dem Einlass 115 / H werden durch den Rotor 149 bis zu dem Bereich gefördert, in dem der Pumpeneinlass 115 / H1 liegt.

Dort kommt der Gasstrom aus dem Pumpeneinlass 115 / H1 hinzu und wird gemeinsam weiter bis zu dem Bereich gefördert, in dem der Pumpeneinlass 115 / H2 liegt. Dieser Vorgang setzt sich analog dem beschriebenen Muster über die grundsätzlich nicht begrenzte Anzahl an Pumpeneinlässen 115 / $H_n$ und die Pumpstufen hinweg bis zum Pumpenauslass 117 fort. An die Pumpeneinlässe H, H1, H2 können jeweils mit nicht gezeigt Rezipienten (z.B. unterschiedliche Bereiche einer Vakuumprozesskammer, in denen verschiedene Aufgaben bzw. Prozessschritte simultan durchgeführt werden, die jeweils verschiedene Vakuumdrücke und Gasströme erfordern) verbunden sein.

Die Pumpeneinlässe 115 / H1 und 115 / H2 sind mit einer Schutzeinrichtung 104 versehen, die das Eindringen von Fremdkörpern verhindern. Das Unterteil 121 schließt am Gehäuse 119 an (bzw. bildet mit diesem zusammen ein die Pumpstufen aufnehmendes Gehäuse) und trägt Kühlrippen 105, die an mehreren Seitenflächen des Unterteils 121 in unterschiedlicher Ausrichtung/Ausgestaltung angeordnet sind. An dem Pumpeneinlass 115 abgewandten Flächen des Gehäuses 119 können weitere Kühlrippen 105 vorgesehen sein. Weiterhin sind das Elektronikgehäuse 123 und der Fluteinlass 133 am Gehäuse 119 angeordnet. Deren Positionierung kann bedarfsgerecht im Rahmen der technischen Gegebenheiten frei gewählt werden. Sie können an verschiedene Flächen des Unterteils 121 oder auch des Gehäuses 119 positioniert werden. Der Pumpenauslass 117 und der Sperrgasanschluss 135 sind auf der Rückseite der Pumpe 111 angeordnet und daher in der gewählten Perspektive nicht sichtbar.

Fig. 8 zeigt eine Pumpe 111 mit mehreren Einlässen, wie sie vorstehend beispielhaft anhand der Fig. 7 beschrieben wurde. Sie umfasst eine Rotorwelle 153, an der zumindest zwei Pumpstufen 15 angeordnet sind. Die Pumpstufen 15 können als turbomolekulare Pumpstufe mit mindestens einer an der Rotorwelle 153 angeordneten Rotorscheibe 155 und mit zumindest einer im nicht dargestellten Gehäuse 119, 121 befestigten Statorscheibe 157 ausgeführt sein. Bei der beispielhaft gezeigten Ausführungsform der Pumpe 111 ist auch eine Holweck-Pumpstufe 15' mit mindestens einer an der Rotorwelle 153 ggf. mittelbar über die Rotornabe 161 befestigten Holweck-Rotorhülse 163 und mit einer im nicht dargestellten Gehäuse 119, 121 befestigten Holweck-Statorhülse 167 vorgesehen. Auf anderen Wirkprinzipien basierende Pumpstufen, wie zum Beispiel Siegbahn- oder Seitenkanal-Pumpstufen, können alternativ oder zusätzlich vorgesehen sein.

Der Pumpeneinlass H ist auf der Hochvakuumseite der Vakuumpumpe 111 vor der ersten Pumpstufe 15 angeordnet, die Pumpeneinlässe H1 und H2 sind zwischen einzelnen oder Gruppen von Pumpstufen 15, 15' angeordnet und der Pumpenauslass 117 / VV ist auf der Vorvakuumseite der Vakuumpumpe hinter den Pumpstufen 15, 15'angeordnet und leitet das gepumpte Medium an eine nicht dargestellte Vorvakuumpumpe weiter.

An verschiedenen Positionen der Vakuumpumpe sind Öffnungen 25.1 bis 25.8 vorgesehen, die je nach Bedarf bedarfsgerecht als Messabgriff, Fluteinlass 133, Sperrgaseinlass 135, Prozessgaseinlass, Vorvakuumanschluss 117 / VV oder zu anderen beliebigen Zwecken als Ein- oder Auslass genutzt werden können.

Zur Bestimmung des einlass- bzw. hochvakuumseitigen Vakuumdrucks im Bereich des Pumpeneinlass H ist herkömmlicherweise ein Messabgriff 25.1 vorgesehen, der im Stand der Technik mit einer aufwändigen und teuren Druckmesseinrichtung versehen wird. Erfindungsgemäß kann dies vermieden werden, indem eine einfachere, günstigere Druckmesseinrichtung an einem der anderen Öffnungen oder Messabgriffe 25.2 bis 25.7 eingesetzt wird, also in einem Bereich an, zwischen oder hinter den Pumpstufen 15, 15', wo durch die Wirkung der Pumpe 111 bereits ein höherer Druck herrscht.

Wenn an die Einlässe H, H1, H2 ein komplexes System angeschlossen ist, z.B. ein System mit kommunizierenden Vakuumkammern, so lässt sich der saugseitig herrschende Druck ebenfalls in der vorstehend beschriebenen Weise mit Hilfe vergleichsweise einfacher Druckmessungen an den Öffnungen/Abgriffen 25.2 bis 25.7 ermitteln, sobald die Druckverhältnisse in dem System ein Gleichgewicht erreicht haben.

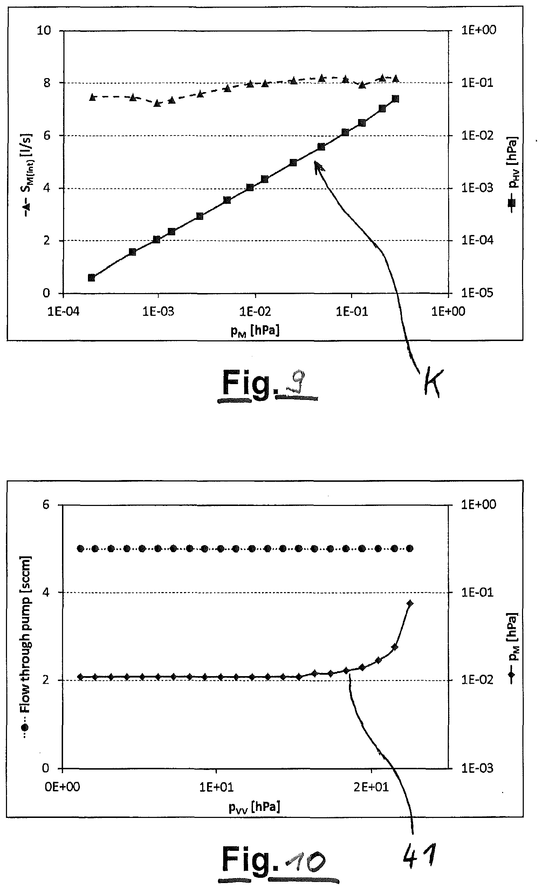

Fig. 9 zeigt das Verhältnis zwischen dem gemessenen Druck am Messabgriff $p_M$ und dem berechneten Hochvakuumdruck $p_{HV}$. Dieses Verhältnis ist der eingangs mehrfach diskutierte Korrekturfaktor K. In der Regel ist er von einer Vielzahl von Betriebsparameter der Pumpe und des zu fördernden Gasgemisches abhängig. Im vorliegenden Beispiel ist das Verhältnis zwischen den Drücken $p_M$ und $p_{HV}$ eine lineare Funktion, so das der gemessene Druck $p_M$ zumindest im gezeigten Druckintervall lediglich mit einem konstanten Korrekturfaktor K zu multiplizieren ist, um den Druck $p_{HV}$ zu erhalten. Das zu fördernde Gas ist im gezeigten Beispiel Stickstoff. Weiterhin ist das interne Saugvermögen $S_M$ dargestellt, das direkten Einfluss auf die Güte des ermittelten Drucks hat. Aufgrund der Stabilität des Parameters $S_M$ ist K im vorliegenden Beispiel im Wesentlichen konstant.

Fig. 10 zeigt das Verhältnis zwischen dem Auslassdruck pvv und dem gemessenen Druck am Messabgriff $p_M$ unter der Voraussetzung, dass ein konstanter Gasstrom durch die Pumpe und damit auch ein konstanter Hochvakuumdruck $p_{HV}$ vorliegt. Über einen weiten Auslass-/Vorvakuumdruckbereich bleibt $p_M$ konstant, erst im Knickbereich 41 bei einem vorliegenden Druck von ca. 20 hPa beginnt der Druck $p_M$ zu steigen, so dass dieser nicht mehr ohne weiteres alleine zur Berechnung von $p_{HV}$ herangezogen werden kann, sondern der Druck $p_{VV}$ als zusätzlicher Parameter in die Berechnung von K eingehen muss. Die Güte bzw. Leistungsfähigkeit, insbesondere die Kompression und der mögliche Gasdurchsatz, der Pumpstufe stromabwärts des Messabgriffs entscheidet entsprechend über die Vorvakuumverträglichkeit der Messmethode.

**Bezugszeichenliste**

| | |
|---|---|
| 15, 15' | Pumpstufe |
| 25.1 | herkömmlicher Messabgriff |
| 25.2 bis 25.7 | Öffnung/Messabgriff |
| 25.8 | Öffnung |
| 27 | Sensor |
| 29 | Messeinrichtung |
| 31 | Druckermittlungseinheit |
| 41 | Knickbereich |
| 104 | Schutzeinrichtung |
| 105 | Kühlrippe |
| 111 | Turbomolekularpumpe |
| 113 | Einlassflansch |

| | |
|---|---|
| 115, H, H1, H2 | Pumpeneinlass |
| 117 | Pumpenauslass |
| 119 | Gehäuse |
| 121 | Unterteil |
| 123 | Elektronikgehäuse |
| 125 | Elektromotor |
| 127 | Zubehöranschluss |
| 129 | Datenschnittstelle |
| 131 | Stromversorgungsanschluss |
| 133 | Fluteinlass |
| 135 | Sperrgasanschluss |
| 137 | Motorraum |
| 139 | Kühlmittelanschluss |
| 141 | Unterseite |
| 143 | Schraube |
| 145 | Lagerdeckel |
| 147 | Befestigungsbohrung |
| 148 | Kühlmittelleitung |
| 149 | Rotor |
| 151 | Rotationsachse |
| 153 | Rotorwelle |
| 155 | Rotorscheibe |
| 157 | Statorscheibe |
| 159 | Abstandsring |
| 161 | Rotornabe |
| 163 | Holweck-Rotorhülse |
| 165 | Holweck-Rotorhülse |
| 167 | Holweck-Statorhülse |
| 169 | Holweck-Statorhülse |
| 171 | Holweck-Spalt |
| 173 | Holweck-Spalt |
| 175 | Holweck-Spalt |
| 179 | Verbindungskanal |
| 181 | Wälzlager |
| 183 | Permanentmagnetlager |
| 185 | Spritzmutter |
| 187 | Scheibe |
| 189 | Einsatz |
| 191 | rotorseitige Lagerhälfte |
| 193 | statorseitige Lagerhälfte |
| 195 | Ringmagnet |
| 197 | Ringmagnet |
| 199 | Lagerspalt |
| 201 | Trägerabschnitt |
| 203 | Trägerabschnitt |
| 205 | radiale Strebe |
| 207 | Deckelelement |
| 209 | Stützring |
| 211 | Befestigungsring |
| 213 | Tellerfeder |
| 215 | Not- bzw. Fanglager |
| 217 | Motorstator |
| 219 | Zwischenraum |
| 221 | Wandung |
| 223 | Labyrinthdichtung |
| A | Auslassseite |
| E | Einlassseite |

S    Strömungsrichtung
K    Korrekturfaktor
VV   Vorvakuum

**Patentansprüche**

1. Vakuumpumpe (111), insbesondere eine Turbomolekularpumpe, mit zumindest einer Pumpstufe (15, 15') und mit einer Druckermittlungseinheit (31) zur Bestimmung eines an einer Saugseite (E) der Vakuumpumpe (111) herrschenden Drucks, die eine Messeinrichtung (29) umfasst,

   wobei ein Messabgriff (25.2 - 25.7) der Messeinrichtung (29) im Bereich der Pumpstufe (15, 15') oder stromabwärts der Pumpstufe (15, 15') vorgesehen ist, wobei in dem Bereich der gemessene Druck bereits durch die Pumpe erhöht wurde, und
   wobei die Druckermittlungseinheit (31) derart ausgestaltet ist, dass der saugseitig herrschende Druck anhand des an dem Messabgriff (25.2 - 25.7) abgegriffenen Drucks bestimmbar ist,
   wobei der Messabgriff als eine Öffnung (25.2 - 25.7) in einem die Pumpstufe (15, 15') aufnehmenden Gehäuse (119, 121) der Vakuumpumpe (111) ausgebildet ist
   **dadurch gekennzeichnet, dass**
   die Öffnung (25.2 - 25.7) auch als Flutöffnung zum Fluten der Vakuumpumpe (111) oder als Schleppgasöffnung nutzbar ist.

2. Vakuumpumpe (111) nach Anspruch 1, **dadurch gekennzeichnet, dass** die Pumpstufe (15, 15') zumindest einen Rotor (153, 163, 165) und einen Stator (157, 167, 169) umfasst.

3. Vakuumpumpe (111) nach Anspruch 1 und 2, **dadurch gekennzeichnet, dass** die Pumpstufe eine Holweckstufe (15') umfasst.

4. Vakuumpumpe (111) nach zumindest einem der vorstehenden Ansprüche, **dadurch gekennzeichnet, dass** die Messeinrichtung (29) einen Drucksensor (27) zur Messung des an dem Messabgriff (25.2 - 25.7) abgegriffenen Drucks umfasst, wobei der Messabgriff (25.2 - 25.7) mit dem Drucksensor (27) in Fluidverbindung steht.

5. Vakuumpumpe (111) nach Anspruch 4, **dadurch gekennzeichnet, dass** der Drucksensor (27) ein Pirani-Vakuummeter ist oder eine kapazitive Messröhre umfasst.

6. Vakuumpumpe (111) nach zumindest einem der vorstehenden Ansprüche, **dadurch gekennzeichnet, dass** die Druckermittlungseinheit (31) derart ausgestaltet sind, dass der saugseitig herrschende Druck auf Basis eines vorbestimmten Korrekturfaktors (K) bestimmbar ist, der ein Verhältnis von dem an dem Messabgriff (25.2 - 25.7) abgegriffenen Druck zu dem saugseitig herrschenden Druck charakterisiert.

7. Vakuumpumpe (111) nach zumindest einem der vorstehenden Ansprüche, **dadurch gekennzeichnet, dass** die Vakuumpumpe (111) zumindest ein Mittel umfasst, mit welchem zumindest ein Betriebsparameter der Vakuumpumpe (111), beispielsweise eine Drehzahl, eine Antriebsleistung, eine Gerätetemperatur oder ein Vorvakuumdruck ermittelbar und die Druckermittlungseinheit (31) übermittelbar und/oder in diese eingebbar ist.

8. Vakuumpumpe (111) nach Anspruch 6 und 7, **dadurch gekennzeichnet, dass** die Druckermittlungseinheit (31) derart ausgestaltet ist, dass der Korrekturfaktor (K) auf Basis des ermittelten oder eingegebenen Betriebsparameters modifizierbar ist.

9. Verfahren zum Bestimmen eines an einer Saugseite einer Vakuumpumpe (111) herrschenden Drucks, die nach einem der vorhergehenden Ansprüche ausgebildet ist, insbesondere einer Turbomolekularpumpe, wobei ein im Bereich einer Pumpstufe (15, 15') der Vakuumpumpe (111) oder stromabwärts der Pumpstufe (15, 15') in der Vakuumpumpe (111) herrschender Druck gemessen wird, in dem der gemessene Druck bereits durch die Pumpe erhöht wurde, wobei der Messabgriff als eine Öffnung (25.2 - 25.7) in einem die Pumpstufe (15, 15') aufnehmenden Gehäuse (119, 121) der Vakuumpumpe (111) ausgebildet ist, und wobei auf Basis des gemessenen Drucks der saugseitig herrschende Druck bestimmt wird.

10. Verfahren nach Anspruch 9, **dadurch gekennzeichnet, dass** ein Korrekturfaktor (K) bestimmt wird, der ein Verhältnis von dem an dem Messabgriff (25.2 - 25.7) abgegriffenen Druck zu dem saugseitig herrschenden Druck charakterisiert, insbesondere wobei die Bestimmung des Korrekturfaktors (K) werksseitig und/oder am Einsatzort erfolgt.

11. Verfahren nach Anspruch 9 oder 10, **dadurch gekennzeichnet, dass** zumindest ein Betriebsparameter der Vakuumpumpe (111), beispielsweise eine Drehzahl, eine Antriebsleistung, eine Gerätetemperatur oder ein Vorvakuumdruck ermittelt und an eine Druckermittlungseinheit (31) der Vakuumpumpe (111) übermittelt oder in diese eingegeben wird.

12. Verfahren nach Anspruch 10 und 11, **dadurch gekennzeichnet, dass** der Korrekturfaktor (K) auf Basis des ermittelten oder eingegebenen Betriebsparameters modifiziert wird.

13. Verfahren nach Anspruch 11 und 12, **dadurch gekennzeichnet, dass** ein auf Basis des Betriebsparameters, insbesondere unter Berücksichtigung des gemessenen Drucks und/oder des bestimmten saugseitig herrschende Drucks, ein Zustandsbewertungsparameter bestimmt wird, der ausgegeben und/oder abgespeichert wird, insbesondere falls der Zustandsbewertungsparameter einen Schwellwert unterschreitet oder überschreitet.

**Claims**

1. A vacuum pump (111), in particular a turbomolecular pump, having at least one pump stage (15, 15') and having a pressure determination unit (31) for determining a pressure present at a suction side (E) of the vacuum pump (111) and comprising a measurement device (29),

   wherein a measurement tap (25.2 - 25.7) of the measurement device (29) is provided in the region of the pump stage (15, 15') or downstream of the pump stage (15, 15'), wherein, in the region, the measured pressure has already been increased by the pump, and
   wherein the pressure determination unit (31) is configured such that the pressure present at the suction side can be determined with reference to the pressure tapped at the measurement tap (25.2 - 25.7),
   wherein the measurement tap is configured as an opening (25.2 - 25.7) in a housing (119, 121) of the vacuum pump (111) receiving the pump stage (15, 15'),
   **characterized in that**
   the opening (25.2 - 25.7) is also usable as a flood opening for flooding the vacuum pump (111) or as a carrier gas opening.

2. A vacuum pump (111) according to claim 1, **characterized in that** the pump stage (15, 15') comprises at least one rotor (153, 163, 165) and a stator (157, 167, 169).

3. A vacuum pump (111) according to claim 1 and 2, **characterized in that** the pump stage comprises a Holweck stage (15').

4. A vacuum pump (111) according to at least one of the preceding claims, **characterized in that** the measurement device (29) comprises a pressure sensor (27) for measuring the pressure tapped at the measurement tap (25.2 - 25.7), with the measurement tap (25.2 - 25.7) being in fluid communication with the pressure sensor (27).

5. A vacuum pump (111) according to claim 4, **characterized in that** the pressure sensor (27) is a Pirani vacuum gauge or comprises a capacitive measuring tube.

6. A vacuum pump (111) according to at least one of the preceding claims, **characterized in that** the pressure determination unit (31) is configured such that the pressure present at the suction side can be determined on the basis of a predefined correction factor (K) which characterizes a ratio of the pressure tapped at the measurement tap (25.2 - 25.7) to the pressure present at the suction side.

7. A vacuum pump (111) according to at least one of the preceding claims, **characterized in that** the vacuum pump (111) comprises at least one means with which at least one operating parameter of the vacuum pump (111), for example a revolution speed, a drive power, a unit temperature, or a prevacuum pressure can be determined and can be transmitted and/or input into the pressure determination unit (31).

8. A vacuum pump (111) according to claim 6 and 7, **characterized in that** the pressure determination unit (31) is configured such that the correction factor (K) can be modified on the basis of the determined or input operating parameter.

9. A method of determining a pressure present at a suction side of a vacuum pump (111) which is configured according to any one of the preceding claims, in particular of a turbomolecular pump, wherein a pressure present in the region of a pump stage (15, 15') of the vacuum pump (111) or downstream of the pump stage (15, 15') in the vacuum pump (111) is measured, in which region the measured pressure has already been increased by the pump, wherein the measurement tap is configured as an opening (25.2 - 25.7) in a housing (119, 121) of the vacuum pump (111) receiving the pump stage (15, 15'), and wherein the pressure present at the suction side is determined on the basis of the measured pressure.

10. A method according to claim 9, **characterized in that** a correction factor (K) is determined which characterizes a ratio of the pressure tapped at the measurement tap (25.2 - 25.7) to the pressure present at the suction side, in particular with the determination of the correction factor (K) taking place ex works and/or at the site of deployment.

11. A method according to claim 9 or 10, **characterized in that** at least one operating parameter of the vacuum pump (111), for example a revolution speed, a drive power, a unit temperature or a pre-vacuum pressure, is determined and is transmitted to and/or input into a pressure determination unit (31) of the vacuum pump (111).

12. A method according to claim 10 and 11, **characterized in that** the correction factor (K) is modified on the basis of the determined or input operating parameter.

13. A method according to claim 11 and 12, **characterized in that** a state evaluation parameter which is output and/or stored is determined on the basis of the operating parameter, in particular while considering the measured pressure and/or the determined pressure present at the suction side, in particular if the state evaluation parameter falls below or exceeds a threshold value.

**Revendications**

1. Pompe à vide (111), en particulier pompe turbomoléculaire, comprenant au moins un étage de pompage (15, 15') et une unité de détermination de pression (31) pour définir une pression régnant sur un côté aspiration (E) de la pompe à vide (111), qui comprend un dispositif de mesure (29), dans laquelle

   une prise de mesure (25.2 - 25.7) du dispositif de mesure (29) est prévue dans la zone de l'étage de pompage (15, 15') ou en aval de l'étage de pompage (15, 15'), zone dans laquelle la pression mesurée a déjà été augmentée par la pompe, et
   l'unité de détermination de pression (31) est conçue de telle sorte que la pression régnant du côté aspiration peut être définie à l'aide de la pression prélevée sur la prise de mesure (25.2 - 25.7),
   la prise de mesure est réalisée sous la forme d'une ouverture (25.2 - 25.7) dans un carter (119, 121), recevant l'étage de pompage (15, 15'), de la pompe à vide (111),
   **caractérisée en ce que**
   l'ouverture (25.2 - 25.7) peut également être utilisée comme ouverture de remplissage pour remplir la pompe à vide (111) ou comme ouverture pour gaz porteur.

2. Pompe à vide (111) selon la revendication 1, **caractérisée en ce que** l'étage de pompage (15, 15') comprend au moins un rotor (153, 163, 165) et un stator (157, 167, 169).

3. Pompe à vide (111) selon les revendications 1 et 2, **caractérisée en ce que** l'étage de pompage comprend un étage de Holweck (15').

4. Pompe à vide (111) selon l'une au moins des revendications précédentes, **caractérisée en ce que** le dispositif de mesure (29) comprend un capteur de pression (27) pour mesurer la pression prélevée sur la prise de mesure (25.2 - 25.7), la prise de mesure (25.2 - 25.7) étant en communication fluidique avec le capteur de pression (27).

5. Pompe à vide (111) selon la revendication 4, **caractérisée en ce que** le capteur de pression (27) est une jauge de Pirani ou comprend un tube de mesure capacitif.

6. Pompe à vide (111) selon l'une au moins des revendications précédentes, **caractérisée en ce que** l'unité de détermination de pression (31) est conçue de telle sorte que la pression régnant du côté aspiration peut être définie sur la base d'un facteur de correction (K) prédéfini qui caractérise un rapport entre la pression prélevée sur la prise de mesure (25.2 - 25.7) et la pression régnant du côté aspiration.

7. Pompe à vide (111) selon l'une au moins des revendications précédentes, **caractérisée en ce que** la pompe à vide (111) comprend au moins un moyen permettant de déterminer au moins un paramètre de fonctionnement de la pompe à vide (111), par exemple une vitesse de rotation, une puissance d'entraînement, une température de l'appareil ou une pression de pré-vide, et de le transmettre à l'unité de détermination de pression (31) et/ou de l'introduire dans celle-ci.

8. Pompe à vide (111) selon les revendications 6 et 7, **caractérisée en ce que** l'unité de détermination de pression (31) est conçue de telle sorte que le facteur de correction (K) peut être modifié sur la base du paramètre de fonctionnement déterminé ou introduit.

9. Procédé de définition d'une pression régnant sur un côté aspiration d'une pompe à vide (111) réalisée selon l'une des revendications précédentes, en particulier d'une pompe turbomoléculaire, dans lequel on mesure une pression régnant dans la zone d'un étage de pompage (15, 15') de la pompe à vide (111) ou en aval de l'étage de pompage (15, 15') dans la pompe à vide (111), zone dans laquelle la pression mesurée a déjà été augmentée par la pompe,

la prise de mesure est réalisée sous la forme d'une ouverture (25.2 - 25.7) dans un carter (119, 121), recevant l'étage de pompage (15, 15'), de la pompe à vide (111), et

la pression régnant du côté aspiration est définie sur la base de la pression mesurée.

10. Procédé selon la revendication 9,
**caractérisé en ce que**
on définit un facteur de correction (K) qui caractérise un rapport entre la pression prélevée sur la prise de mesure (25.2 - 25.7) et la pression régnant du côté aspiration, la définition du facteur de correction (K) étant en particulier effectuée en usine et/ou sur le lieu d'utilisation.

11. Procédé selon la revendication 9 ou 10,
**caractérisé en ce que**
au moins un paramètre de fonctionnement de la pompe à vide (111), par exemple une vitesse de rotation, une puissance d'entraînement, une température de l'appareil ou une pression de pré-vide, est déterminé et transmis à une unité de détermination de pression (31) de la pompe à vide (111) ou est introduit dans celle-ci.

12. Procédé selon les revendications 10 et 11,
**caractérisé en ce que**
le facteur de correction (K) est modifié sur la base du paramètre de fonctionnement déterminé ou introduit.

13. Procédé selon les revendications 11 et 12,
**caractérisé en ce que**
un paramètre d'évaluation d'état est défini sur la base du paramètre de fonctionnement, en particulier en tenant compte de la pression mesurée et/ou de la pression définie régnant du côté aspiration, ce paramètre étant émis et/ou mémorisé, en particulier si le paramètre d'évaluation d'état passe au-dessous ou au-dessus d'une valeur seuil.

_Fig. 1_

Fig. 2

Fig. 3

B-B

Fig. 4

Fig. 5

111

119, 121

S~

15

15'

E, 115  183
153

155
25.2
157
25.3

25.4

27  29

181

~157

A, 117

31

Fig. 6

**Fig. 7**

EP 3 438 460 B1

*Fig. 8*

**Fig. 9**

K

**Fig. 10**

41

**IN DER BESCHREIBUNG AUFGEFÜHRTE DOKUMENTE**

**In der Beschreibung aufgeführte Patentdokumente**

- JP H0674187 A
- DE 10354205 A1
- DE 4410903 A1